# FASCICULE DE BREVET EUROPEEN

(11) **EP 1 507 716 B1**
(45) Date de publication et mention de la délivrance du brevet: **23.08.2006**
(21) Numéro de dépôt: 03747476.4
(22) Date de dépôt: 29.04.2003
(51) Int. Cl.: B65D 81/26, B01J 20/28

(54) **MATERIAU D'EMBALLAGE A CAVITE, NOTAMMENT POUR MATIERE VEGETALE**
VERPACKUNGSMATERIAL MIT HOHLRAUM, INSBESONDERE FÜR PFLANZLICHES MATERIAL
PACKAGING MATERIAL WITH CAVITY, IN PARTICULAR FOR VEGETABLE MATERIAL

(30) Priorité: 03.05.2002 FR 0205548
(43) Date de publication de la demande: 23.02.2005
(73) Titulaire: Rasar Holding N.V., Willemstad, Curaçao (AN)
(72) Inventeur: BEAUDOUIN, Jean-Michel, Claude, Edouard, CH-8702 ZOLLIKON (CH); DREAN, Henri, F-75016 PARIS (FR)
(74) Mandataire: Müller, Christoph Emanuel
(86) Numéro de dépôt international: PCT/FR2003/001346
(87) Numéro de publication internationale: WO 2003/093134

(56) Documents cités:
- WO-A-00/64577
- WO-A-96/24541
- US-A- 4 421 235
- US-A- 4 528 228
- US-A- 4 847 145
- US-A- 5 334 623

## Description

La présente invention se rapporte aux matériaux d'emballage et, plus particulièrement, à ceux destinés à la protection de matières végétales à conserver.

Le document US-A - 4 528 228 décrit un tampon d'amortissement comprenant une couche de matière d'amortissement, une enveloppe perméable aux gaz contenant cette couche et une composition chimique dispersée dans les vides de la couche. Ce document décrit deux nappes perméables à l'éthylène gazeux qui délimitent entre elles une cavité, et une substance apte à retenir des gaz logée dans la cavité; le tampon est placé à l'intérieur d'un conteneur.

US-A-4 421 235 montre un sachet absorbant de l'oxygène destiné à être placé à l'intérieur d'un conteneur.

Le document US-A - 5 334 623 décrit une substance absorbante. Il ne décrit pas deux nappes délimitant entre elles une cavité dans laquelle se trouve une substance. En outre, ce brevet vise une composition très particulière contenant de la tétrazine.

L'invention vise un matériau d'emballage qui permet de conserver plus longtemps les matières végétales qui y sont emballées.

Le matériau d'emballage comprend deux nappes délimitant entre elles une cavité. Suivant l'invention :
a) une substance apte à retenir des gaz en son sein est logée dans la cavité,
b) l'une au moins des nappes est en une matière perméable à l'éthylène gazeux et imperméable à la vapeur d'eau.

En mettant la substance apte à retenir des gaz dans la cavité, on l'empêche de venir directement en contact avec la matière végétale enveloppée en sorte que la substance apte à retenir des gaz n'a pas à être de qualité alimentaire. Mais surtout, on créé dans la cavité une atmosphère appauvrie en vapeur d'eau et appauvrie également en éthylène gazeux qui est le composé représentatif des gaz volatils dégagés par la respiration de la matière végétale.

La substance active (c'est-à-dire apte à retenir des gaz en son sein), de préférence collée sur le support, permet la protection de proximité des matières végétales ou autres à conserver. En effet, les végétaux en cours de maturation dégagent des composés volatils issus de la respiration de la matière. Ce rejet de ces composés et la proximité de ces éléments du végétal en maturation provoque une auto-catalyse du mécanisme complexe de la respiration de ces matières. L'intensité respiratoire des matières en général est caractérisée par le rapport de la quantité d'oxygène absorbée par rapport à la quantité de dioxyde de carbone rejetée et, par conséquent, des composés organiques diffusant de la surface de matière en cours de maturation. La dynamique de cette respiration est accélérée par certains de ces composés organiques volatils au contact de la surface extérieure de cette substance d'où ils émanent. Cette auto-catalyse de la respiration, donc de la maturation, est directement liée à la teneur de ces composés dans ie volume atmosphérique directement au contact avec la matière végétale en cours de maturation. Pour limiter cette intensité respiratoire, il faut limiter les composés organiques volatils responsable d'une certaine auto-catalyse. Pour cela la matière active placée à proximité immédiate du végétal en cours de maturation va permettre selon ses caractéristiques d'adsorber et d'absorber les composés organiques volatils essentiels provoquant l'auto-catalyse des mécanismes de maturation de tous les végétaux.

La substance est apte à retenir des gaz en son sein, notamment à absorber des gaz, mais, de préférence, cette substance active est non seulement apte à adsorber des gaz, mais également à les absorber. On préfère tout particulièrement la substance active décrite à la demande de brevet internationale WO 00/64577. Il s'agit d'une matière poreuse présentant une capacité d'adsorption d'environ 20 à 30% par rapport à son poids sec et comportant environ 47 à 50% en poids d'une structure composite de silicium et de carbone, environ 12 à 20% en poids de carbone, environ 5 à 7% en poids d'hydroxyle et environ 1 à 2% en poids d'oxygène. De préférence, cette substance comporte dans un volume périphérique correspondant sensiblement à un tiers du volume total de la matière, environ 75 à 85% de porosités dont la dimension est comprise entre 10 et 50 angström et dans le volume central restant environ 80 à 90% de cavités dont la dimension est comprise entre environ 200 angström et 2 µm. Sa surface spécifique peut être comprise entre 1200 et 2200 m²/g. Elle peut comporter environ 20% en poids d'oxyde d'alumine et environ 5% en poids d'iodure. Son humidité relative peut être inférieure à 2% sur son poids sec. On préfère que la substance active ait une granulométrie comprise entre 10 et 350 µm. On trouvera un procédé de préparation de cette substance dans la demande internationale précitée.

La nappe en une matière perméable à l'éthylène et imperméable à la vapeur d'eau est, de préférence, en cellulose hydrophobe. La perméabilité à la vapeur d'eau est comprise, de préférence, entre 600 et 1000 g/m2 par 24 heures à 38% d'humidité relative. De préférence, les deux nappes sont en la même matière et, de préférence également, la substance est collée à l'une des nappes, en sorte qu'elle est bien répartie dans tout le logement.

Suivant un mode de réalisation préféré, la matière de l'une au moins des nappes comporte des pores ouverts à polarité électrique. Cela a pour effet de favoriser l'effet de cheminée d'aspiration des gaz. Cette polarisation peut avoir un effet aseptisant de l'atmosphère se trouvant dans la cavité.

L'invention vise également un emballage dont l'une au moins des parois est en un matériau suivant l'invention ainsi qu'une matière végétale emballée dans un emballage suivant l'invention.

L'emballage peut être constitué par un papier d'emballage conformé en cornet par un pont ou une barquette dont au moins une paroi est en un matériau suivant l'invention, la matière végétale étant de préférence à distance du matériau d'emballage.

Au dessin annexé, donné uniquement à titre d'exemple :
la figure 1 est une vue en coupe d'un matériau d'emballage suivant l'invention,
la figure 2 est une vue en perspective partiellement en coupe d'un mode de réalisation du matériau d'emballage suivant l'invention,
la figure 3 est une vue en perspective d'une barquette suivant l'invention,
la figure 4 est une vue en perspective de fleurs emballées, et
la figure 5 représente un sachet suivant l'invention contenant de la salade.

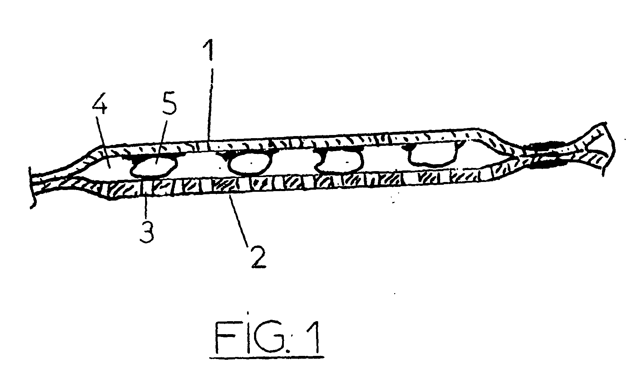

Le matériau d'emballage représenté à la figure 1 comprend deux nappes 1, 2 en cellulose hydrophobe, qui est une matière perméable à l'éthylène gazeux, mais imperméable à la vapeur d'eau comme cela a été symbolisé par les orifices 3. Les deux nappes sont jointes à leurs extrémités et délimitent ainsi une cavité 4. A la nappe 1 extérieure sont collés des grains 5 de la substance décrite au WO 00/64577. La nappe 2 intérieure est en un matériau de qualité alimentaire. Les pores des nappes 1 et 2 sont polarisés comme symbolisés par les signes - et + à la figure 1.

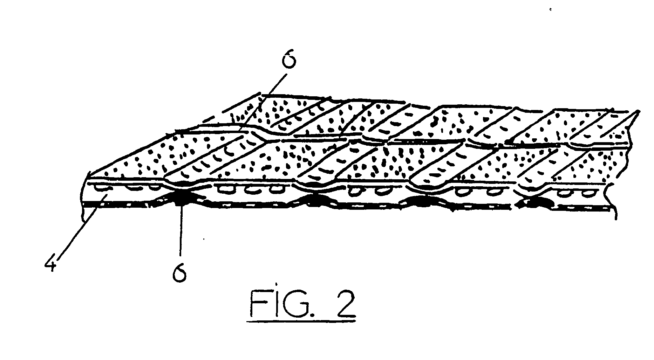

La figure 2 représente le matériau de la figure 1, les cavités 4 étant délimitées les unes par rapport aux autres par des lignes 6 de thermosoudage ou de thermocollage tant dans le sens transversal que dans le sens longitudinal.

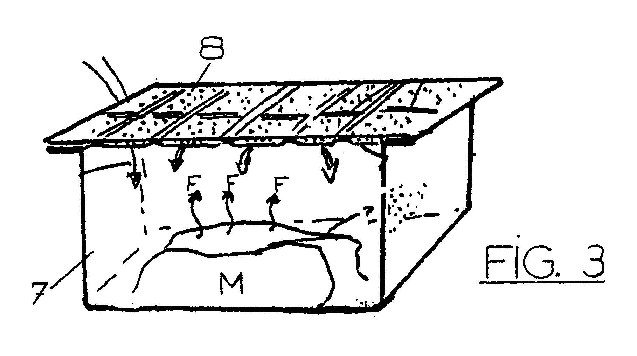

La figure 3 représente une barquette ayant un corps 7 en matière plastique habituel et contenant une matière végétale M sur le fond. Le couvercle 8 est en un matériau d'emballage conforme à la figure 2. La matière M végétale voit sa respiration affaiblie par le manque d'oxygène et ses composés organiques volatils produits, symbolisés par des flèches F, sont immédiatement transformés par la substance active, tandis qu'une légère quantité de CO2 se rajoute à celle fournie par la respiration de la matière végétale, ce qui a pour effet d'étouffer encore davantage cette respiration végétale et d'éliminer l'auto-catalyse provoquée généralement par certains composés organiques dont l'éthylène. La vapeur d'eau produite par la respiration est limitée et reste sous forme de vapeur sur les parois, ce qui créé un environnement favorable à la conservation. L'effet aseptisant de la substance active favorise la conservation des qualités organoleptiques de la matière végétale M. Ce matériau d'emballage permet d'améliorer la durée de conservation de 50 à 500 % selon la matière végétale.

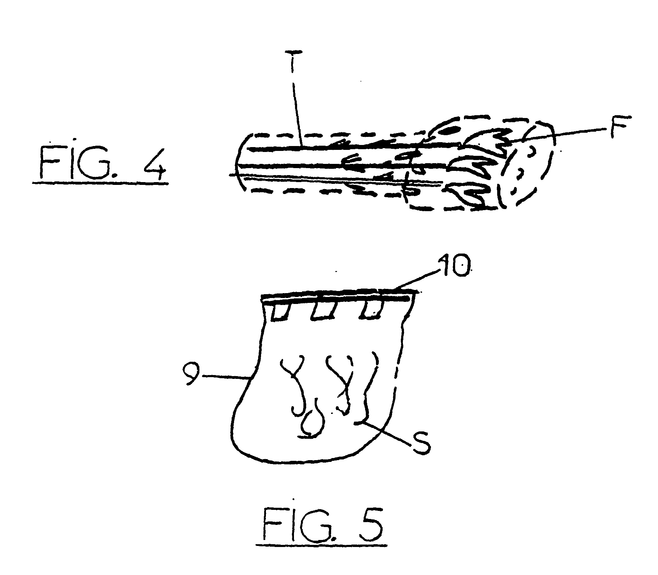

La figure 4 représente un conditionnement de fleurs. Les fleurs F sont disposées à proximité immédiate du matériau d'emballage suivant l'invention en contact avec la nappe intérieure ou près de celle-ci, tandis que les tiges T plus rigides sont enveloppées dans un papier actif.

De la salade S est contenue dans le sachet représenté à la figure 5. Ce sachet comporte un corps 9 et une ouverture qui est scellée par un dispositif 10 de scellement. Les bords du dispositif 10 de scellement sont constitués par du matériau d'emballage suivant l'invention.

## Revendications

1. Matériau d'emballage comprenant deux nappes (1, 2) délimitant entre elles une cavité (4), **caractérisé en ce que**
a) une substance (5) apte à retenir des gaz en son sein est logée dans la cavité (4),
b) l'une au moins des nappes (1, 2) est en une matière perméable à l'éthylène gazeux et imperméable à la vapeur d'eau,

2. Matériau suivant la revendication 1, **caractérisé en ce que** les deux nappes (1, 2) sont en une matière perméable à l'éthylène gazeux et imperméable à la vapeur d'eau.

3. Matériau suivant la revendication 1, **caractérisé en ce que** les deux nappes (1, 2) sont en la même matière.

4. Matériau suivant la revendication 1, **caractérisé en ce que** la substance (5) est collée à l'une des nappes (1).

5. Matériau suivant l'une des revendications 1 à 4, **caractérisé en ce que** la matière de l'une au moins des nappes (1) comporte des pores ouverts à polarité électrique.

6. Emballage **caractérisé en ce que** l'une au moins de ses parois est en un matériau suivant les revendications 1 à 5.

7. Matière végétale emballée, **caractérisée en ce qu'**elle est emballée dans un emballage suivant la revendication 6.

8. Matière végétale emballée suivant la revendication 7, **caractérisée en ce qu'**elle est à distance de la substance du matériau d'emballage.

## Claims

1. Packaging material, comprising two cloths (1,2) confining a cavity (4) there between, **characterized in that**
a) a substance (5) is situated in the cavity (4), which substance (5) is apt to retain gases inside;
b) at least one of the cloths (1,2) is a material which is permeable for gaseous ethylene and which is impermeable for water vapour.

2. Packaging material according to claim 1, **characterized in that** both cloths (1,2) are of a material which is permeable for gaseous ethylene and which is impermeable for water vapour.

3. Packaging material according to claim 1, **characterized in that** both cloths (1,2) are of the same material.

4. Packaging material according to claim 1, **characterized in that** the substance (5) is adhered to one of the cloths (1).

5. Packaging material according to one of claims 1 to 4, **characterized in that** the material of at least one of the cloths (1) comprises pores, which are open towards electric polarity.

6. Packaging, **characterized in that** at least one wall is of a packaging material according to one of claims 1 to 5.

7. Packed vegetable material, **characterized in that** it is packaged in a packaging according to claim 6.

8. Packed vegetable material according to claim 7, **characterized in that** it is at distance from the substance of the packaging material.

## Patentansprüche

1. Verpackungsmaterial, umfassend zwei Tücher (1,2) welche zwischen sich eine Kavität (4) begrenzen, **dadurch gekennzeichnet, dass**
a) eine Substanz (5) in der Kavität (4) angeordnet ist, welche geeignet ist, Gase in ihrem Inneren festzuhalten;
b) wenigstens eines der Tücher (1,2) ein Material ist, welches für gasförmiges Ethylen durchlässig und für Wasserdampf undurchlässig ist.

2. Verpackungsmaterial gemäss Anspruch 1, **dadurch gekennzeichnet, dass** beide Tücher (1,2) aus einem Material sind, welches für gasförmiges Ethylen durchlässig und für Wasserdampf undurchlässig ist.

3. Verpackungsmaterial gemäss Anspruch 1, **dadurch gekennzeichnet, dass** beide Tücher (1,2) aus demselben Material sind.

4. Verpackungsmaterial gemäss Anspruch 1, **dadurch gekennzeichnet, dass** die Substanz (5) an einem der Tücher (1) angehaftet ist.

5. Verpackungsmaterial gemäss einem der Ansprüche 1 bis 4, **dadurch gekennzeichnet, dass** wenigstens eines der Tücher (1) Poren enthält, welche für elektrische Polarität offen sind.

6. Verpackung, **dadurch gekennzeichnet, dass** wenigstens eine Wand aus einem Material gemäss einem der Ansprüche 1 bis 5 ist.

7. Verpacktes pflanzliches Material, **dadurch gekennzeichnet, dass** es in einer Verpackung gemäss Anspruch 6 verpackt ist.

8. Verpacktes pflanzliches Material gemäss Anspruch 7, **dadurch gekennzeichnet, dass** es von der Substanz des Verpackungsmaterials beabstandet ist.
